# EUROPEAN PATENT SPECIFICATION

(11) **EP 1 916 907 B1**
(45) Date of publication and mention of the grant of the patent: **14.03.2012**
(21) Application number: 05763548.4
(22) Date of filing: 15.07.2005
(51) Int. Cl.: C09B 67/00, A23K 1/16, A23K 1/175, A23K 1/18

(54) **ANIMAL FEED**
TIERFUTTER
ALIMENTS POUR ANIMAUX

(43) Date of publication of application: 07.05.2008
(73) Proprietor: Fisher Feeds Limited, Listowel, Ontarion N4W 3H4 (CA)
(72) Inventor: FISCHER, Rae, Listowel, Ontario N4W 3G6 (CA)
(74) Representative: Zeuner Summerer Stütz
(86) International application number: PCT/CA2005/001109
(87) International publication number: WO 2007/009205

(56) References cited:
- WO-A-93/14645
- CA-A1- 999 471
- CA-A1- 2 106 774
- CA-A1- 2 274 084
- CA-A1- 2 401 339
- GB-A- 1 571 405
- GB-A- 2 016 900
- US-A- 3 493 395
- US-A- 3 971 859
- US-A- 4 636 261
- US-A1- 2003 203 096
- ROPER, T.J., AND MARPLES, N.M.: "Colour preferences of domestic chicks in relation to food and water presentation" APPLIED ANIMAL BEHAVIOUR SCIENCE., vol. 54, 1997, pages 207-213, XP002530888 ELSEVIER SCIENCE PUBLISHERS BV., AMSTERDAM.

## Description

The present invention is related to animal feed, particularly to poultry and swine feed.

### Description of Related Art

It is generally known in the art that color affects feeding behavior of animals. Several scientific and anecdotal studies have demonstrated that color is a stimulus for feed consumption, both alone and in combination with other factors. However, despite the body of knowledge on the effects of color and colored feed on feeding behaviour, attempts at efficiently incorporating color into animal feed, particularly on a large scale, especially in a feed mill, have been largely unsuccessful. Thus, there remains a need for colored animal feed, ways to color animal feed efficiently, and large-scale processes for coloring animal feed, especially in a feed mill.

From US A 3 971 859 a method for preparing edible food flavoring pellets for incorporation in dry baking mixes is known. The general formulation mentioned on page 4, example 2 (2nd table) contains 1 wt% of FD&C color, 3-6 wt% of salt and 90% sugars.

Document US 2003/203096 A1 relates to a universal sauce base, i.e. an edible composition having a low pH for use in hot or cold food applications that is microbiologically stable, heat stable and freeze-thaw tolerant.

Document GB-A-1 571 405 is directed to food products containing potato pulp. The example of Table II contains a total of 700 g of ingrediences, and contains in particular 180 g of tomato concentrate with 28% dry matter. The proportion of food-coloring agent in this sample is therefore 180 g/ 700 g = 25.7%. Further, the example of Table II contains 120 g (17.1%) malto-dextrine, 30 g (4.2 %) salt and 100 g (14.3 %) vinegar. The amount of the component consisting of sugar, salt or another electrolyte is thus 35.6%.

Document GB-A-2 016 900 is directed to a concentrated soup product. The concentrated vegetable soup of example A contains 11 - 13% salt, 4 - 6% of monosodium glutamate and 5 - 8% sugar or dextrose, giving a total of 20 - 27%.

Document US-A-3 493 395, directed to a process for preparing a savory meat flavoring, discloses in example 1 four types of gravy tablets. Type b contains 3.25% tomato powder and further contains 15% cooking salt, 0.75% dextrose and 0.14% cysteine-hydrochlorid, i.e. a total of 15.89%.

The paper "Colour preferences of domestic chicks in relation to food and water presentation", T.J. Roper and N. M. Marples, Applied Animal Behaviour Science 54 (1997) 207-213, is directed to the preparation of colored animal feed. On page 208, paragraph 5, the paper discloses that colored water was produced by mixing 1 ml of red food coloring (Maro red) into 200 ml water. This mixture is, however, not used to prepare colored animal feed, but the chicks' responsiveness to the colored water itself was investigated. The proportion of food-coloring agent (Maro red) is only 1 ml /200 ml = 0.5%. Also, there is no disclosure of the presence of a component consisting of sugar, salt or another electrolyte.

With respect to the colored food mentioned in page 208, paragraph 5, the colored food was made by mixing 0.5 ml red food coloring with 1.5 ml water. The resulting solution was stirred into 11 g of chick crumbs which were then spread out on paper and allowed to dry. The concentrate from which colored animal feed is prepared, thus consists of 0.5 ml red food coloring and 1.5 ml water. The proportion of food-coloring agent is then 0.5 ml /2.0 ml = 25%. Also, there is no disclosure of the presence of a component consisting of sugar, salt or another electrolyte.

### Summary of the Invention

According to a first aspect of the invention, there is provided a concentrate for preparing a colored animal feed according to claim 1. According to another aspect of the invention, there is provided a process for preparing colored animal feed according to claim 4. According to a further aspect of the invention, there is provided a colored animal feed according to claim 9. According to a further aspect of the invention, there is provided a method of increasing weight gain of an animal according to claim 10.

### Concentrates:

Food-coloring agents used in concentrates of the present invention are physiologically acceptable insofar as they do not cause undue adverse reactions in an animal at amounts typically consumed by the animal eating a feed prepared using the concentrate. Furthermore, the food-coloring agent is compatible with animal feed ingredients insofar as the coloring agent does not react with other feed ingredients to unduly produce undesirable side-products. Preferably, the food-coloring agent can be mixed with the animal feed ingredients in a generally uniform manner. Preferably, the food-coloring agent is approved for use in animal feeds by the pertinent regulatory body of the state in which the feed is to be used.

The color of the food-coloring agent is one that enhances consumption of animal feed by the animal. Preferably, the color is red or blue, more preferably red. Colors can have different shades, tones and/or tints and the shades, tones and tints of a color included in the scope of that color. Some shades of red include, for example, scarlet, crimson, vermilion, carmine, maroon, burgundy, ruby, rose, madder, rouge, brick, blood red, blush, fire engine red, cinnabar, russet, rust, Venetian red, flame, Indian red and tomato. Some shades of blue include, for example, azure, cerulean, cobalt, cornflower blue, denim, dodger blue, International Klein blue, midnight blue, navy blue, periwinkle, powder blue, Prussian blue, royal blue, steel blue and ultramarine blue. A particularly preferred example of a red food-coloring agent is FD & C Red #40 dye. Mixtures of food-coloring agents may be used.

The food-coloring agent is present in the concentrate in an amount of from 2 wt% to 10 wt% based on the weight of the concentrate. An amount of from about 3 wt% to about 7 wt% is of particular note.

Components consisting of at least one element of the group consisting of sugars, salts and other electrolytes (thereafter referred to as "component") used in concentrates are physiologically acceptable insofar as they do not cause undue adverse reactions in an animal at amounts typically consumed by the animal eating a feed prepared using the concentrate. Furthermore, the component is compatible with animal feed ingredients insofar as the component does not react with other feed ingredients to unduly produce undesirable side-products. Preferably, the component can be mixed with the animal feed ingredients in a generally uniform manner. Components may be selected for their ability to help disperse or dissolve the food-coloring agent in the carrier and/or other animal feed ingredients to help ensure a more homogeneous dispersal of the coloring agent in the feed.

Some examples of electrolytes are salts (e.g. alkali metal salts, alkaline earth metal salts, halide salts, phosphates, sulphates, nitrates, etc.) Preferred examples of electrolytes are sodium chloride, potassium chloride, magnesium chloride, magnesium sulphate and mixtures thereof. Sugars are e.g. sucrose, dextrose, fructose, mannose, etc.. A preferred example of sugar is dextrose. The component may consist of mixtures of electrolytes, some examples of which are salts, and sugars.

The component is present in the concentrate in a total amount of from 3 wt% to 15 wt% based on the weight of the concentrate. An amount of from about 4 wt% to about 10 wt% is of particular note.

In general, electrolytes help correct dehydration and electrolyte loss in animals during periods of stress caused by placement and/or movement of the animals. Standard electrolyte mixtures may be used in the preparation of the concentrate. For poultry and swine, for example, electrolyte mixtures listed in the Compendium of Medications for Poultry, Poultry Industry Council, Guelph, Ontario 2001 may be used.

A physiologically acceptable carrier in form of water forms the balance of the concentrate. Physiologically acceptable carriers are capable of forming relatively homogeneous dispersions or solutions with the food-coloring agent and electrolytes, and do not cause undue adverse reactions in an animal ultimately eating the carrier. Preferably, the carrier is purified. Carriers may be purified by any known technique. For example, the carriers may be purified by distillation, reverse osmosis, filtration, ion exchange chromatography, etc. The carriers may also serve to "activate" the coloring agent since some coloring agents require the presence of a liquid medium in order for the color to be homogeneously distributed throughout the resultant feed at the end of a milling process.

Concentrates may be prepared by mixing the coloring agent, the component and carrier to form a generally homogeneous blend or solution.

Concentrates of the present invention are surprisingly advantageous in that they can be used at any number of feed processing steps to successfully prepare colored animal feed, especially on a large scale in a feed mill. Such versatility permits tailoring of feed processing to meet the needs of a particular operation.

### Colored Animal Feed and Processes for Preparation Thereof:

Animal feeds typically contain a wide variety of ingredients to provide a well-balanced diet. Feeds may also contain pharmaceutical and/or nutraceutical ingredients to provide enhanced health for the animals. The nature and proportion of the ingredients in the feed depend on many factors, for example, the type of animal, the age of the animal, nutritional requirements of the animal, individual feed producer preference and the cost of ingredients. Feed compositions may change from week to week due to such factors. Concentrates of the present invention may be used to produce colored feed of any composition.

Concentrates of the present invention are particularly advantageous in preparing colored pre-starter and starter feeds. Preferably, concentrates are used to produce feed for swine and poultry (e.g. chickens (layers, broilers, roasters, etc.) and turkeys). Concentrates are more particularly advantageous for preparing colored pre-starter and starter feeds for poultry and swine, especially poultry.

A typical feed contains macro ingredients, micro ingredients and liquid ingredients. Macro ingredients are typically used in a feed milling process in relatively large amounts and in dry form. Micro ingredients are typically used in relatively small amounts and in dry form. Macro ingredients may include, for example, grains (e.g. wheat, barley, canola, oats, flax, etc.), rolled corn, soya bean meal, protein meals of various types, some minerals sources, fillers, etc. Micro ingredients may include, for example, vitamins, some minerals, enzymes, amino acids, salts, antibiotics, probiotics, organic acids, buffers, etc. Liquid ingredients may include, for example, fats, greases, methionine, etc. Feed compositions are well within the ability of one skilled in the art to produce and the exact feed composition produced by any one feed supplier is often proprietary.

In a typical feed milling process, the various ingredients are stored in tanks and fed through feed lines to a main mixing tank. Some of the ingredients, for example the micro ingredients, may be pre-mixed in batches and then fed to a main mixer. Other ingredients, for example grains, may be ground before being fed into the mixer. Other pre-mixing processing steps may be used as desired or required. A carrier, for example water, may be used when needed to ensure that ingredients are carried into and mixed in the mixer. The ingredients may be mixed in the main mixer, preferably in a batch of 0.5-3 metric tonnes, to form a mash. The mash is pelletized, and expanded if desired. Pellets are then distributed into containers for bulk shipping. The mill is flushed after each feed order is made in compliance with Hazard Analysis Critical Control Points (HACCP) or like regulations.

Concentrates may be advantageously employed at any of a number of stages of the process to impart color to the feed. In one embodiment, the concentrate may be added to the mixer and mixed together where most of the other feed ingredients are mixed. The concentrate may be added to the mixer by any convenient means, for example by feeding from a storage tank or by pouring from a pail. In another embodiment, the concentrate may be added to the mash after mixing of the ingredients but before pelletizing, for example when the mash is expanded. In yet another embodiment, the concentrate may be added to the feed after pelletizing but before distribution into containers. The concentrate may be used in any amount that imparts sufficient color to the feed. For example, the concentrate is preferably used in an amount of from about 5-20 kg concentrate per 1000 kg feed (0.5-2 wt%), more preferably 7-15 kg per 1000 kg (0.7-1.5 wt%), for example 12 kg per 1000 kg (1.2 wt%).

In still yet another embodiment, the concentrate may be applied to feed in a barn or other animal feeding location. Preferably, the concentrate is diluted with an appropriate amount of diluent and applied directly to the feed. The diluent is preferably the same as the carrier used in the concentrate being water. The volume ratio of diluent concentrate is preferably in a range of from about 200:1 to about 10:1, more preferably from about 150:1 to about 25:1. Application may be accomplished by any suitable technique, for example, spraying, pouring, dipping, etc. Spraying is preferred as it permits more even application of the color. The colored animal feed is allowed to dry before providing the colored feed to the animals.

### Methods of Use of Colored Animal Feed:

Colored animal feed is useful for enhancing feed consumption by animals and for increasing weight gain of animals. It is believed that the color attracts animals to the feed thereby encouraging them to eat more. This increases the likelihood of survival of the animal as well as overall weight gain of the animal.

Colored animal feed has been found to be particularly useful for new born and young animals. Particularly in the first 7 days of the animal's life, a small increase in weight will lead to better survivability and a much heavier shipping weight. This increases profitability of the animal growing operation. Therefore, enhancing feed consumption and increasing weight gain in the first 7 days is particularly important. Colored animal feed prepared in accordance with the present invention is particularly useful in the first 7 days of the animal's life.

Colored animal feed prepared in accordance with the present invention is particularly useful for enhancing feed consumption and weight gain of poultry and swine, more particularly of poultry. Poultry includes, for example, chickens (e.g. layers, broilers, roasters, etc.) and turkeys.

In respect of broiler chickens, for example, it has been shown in the art that anatomic changes in the digestive tract during the first days of life are remarkable. Broilers achieve a maximum relative weight of the digestive organs when they are between 3 and 8 days of age. The highest increase in volume of villi in the duodenum occurs when the birds are 4 days old and in the jejunum and ileum when they are 10 days old. If the birds don't achieve the maximum development of the villi in the duodenum in the first week and the jejunum and ileum in the second week, they are likely to have difficulty in developing good digestion and absorption capacities during their lives.

For optimal results, all other factors that affect the health of the animals should be controlled to industry standard. These include, for example, ventilation, cleanliness of living area, feeder placement, availability of fresh water, temperature, humidity, light, etc. Such factors are well known to one skilled in the art.

Further features of the invention will be described or will become apparent in the course of the following detailed description.

### Brief Description of the Drawings

In order that the invention may be more clearly understood, a preferred embodiment thereof will now be described in detail by way of example, with reference to the accompanying drawings, in which:
Fig. 1 is a schematic diagram of a feed milling operation; and,
Fig. 2 shows results for the effect on weight gain of broiler chicks of red colored feed prepared by a spray method.

### Detailed Description of Preferred Embodiments

### Example 1: Preparation of Concentrates

A concentrate (12 kg) for coloring feed red was prepared by mixing the ingredients listed in Table 1 in a pail until a homogeneous mixture was formed:

**Table 1**

| Ingredient | Amount (q) | Purpose |
|---|---|---|
| FD & C Red #40 dye | 500.0 | Red colorant |
| Sodium chloride | 300.00 | Electrolyte |
| Potassium chloride | 15.0 | Electrolyte |
| Magnesium chloride | 7.5 | Electrolyte |
| Magnesium sulphate | 7.5 | Electrolyte |
| Dextrose | 400.0 | Sugar |
| Distilled water | 10,770.0 | Carrier |
| Total: | 12,000.0 | |

### Example 2: Feed Compositions

A suitable red colored broiler chicken starter feed composition is provided in Table 2. This composition may be prepared in a feed mill in accordance with the process described in Example 3 below.

Limestone is a source of calcium. Mono-Dical Ca16/P21 is a source of phosphate. Alimet is a source of methionine. FF Broiler Micro Premix is a mixture of vitamins and minerals. Soda bicarb is sodium bicarbonate acting a pH buffer. Col-CI70 is choline chloride. Corn-soy enzyme is a mixture of glucanase and xylanase.

**Table 2**

| Ingredient | Amount (kg) |
|---|---|
| Corn Fine Rolled 8.0%CP | 494.37 |
| Soya Bean Meal (SBM) 47.5%CP | 123.45 |
| Canola Meal 37% CP | 100.00 |
| Meat and Bone Meal 50%CP | 100.00 |
| Wheat HRS Western 13%CP | 75.00 |
| Wheat Shorts 16%CP | 71.60 |
| Concentrate of Example **1** | 12.00 |
| Poultry Fat | 10.00 |
| Limestone B2 Grade | 4.10 |
| Salt white mixing | 2.40 |
| Mono-Dical Ca16/P21 | 2.00 |
| Alimet 88% | 1.68 |
| FF Broiler Micro (1 kg) Premix | 1.25 |
| Lysine-HCl | 0.75 |
| Soda bicarb - BP | 0.50 |
| Copper sulphate (25) | 0.40 |
| Chol-CI70 | 0.30 |
| Corn-soy enzyme | 0.20 |
| Total: | 1000.00 |

### Example 3: Process for Preparing Feed Compositions

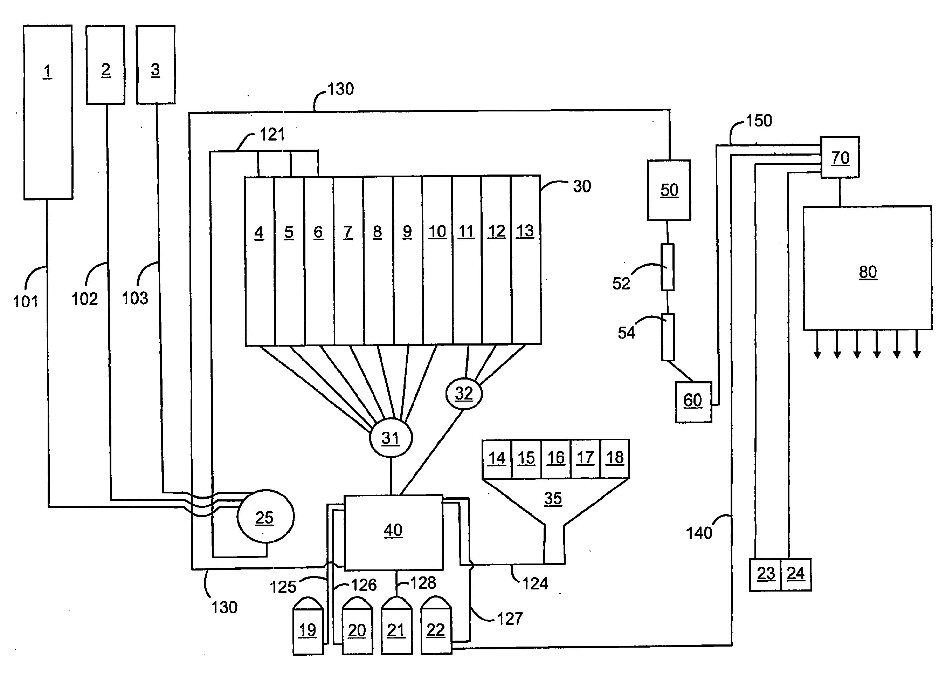

Referring to Fig. 1, the composition as described in Example 2 may be prepared in a feed mill as follows.

Corn, wheat HRS and wheat screenings are stored in external bins **1,2,3** respectively and fed to grinder **25** through lines **101,102,103** respectively where they are ground separately. Ingredients from grinder **25** are fed through line **121** and distributed to bins **4,5,6** in central storage area **30** of the feed mill where each ground ingredient is stored separately. Soya bean meal, canola meal, wheat shorts and meat and bone meal are stored in bins **7,8,9,10** respectively in central storage area **30.** Limestone, salt and mono dical are stored in bins **11,12,13** respectively in central storage area **30.** FF Broiler Premix, lysine, soda bicarb and copper sulphate are stored in bins **14,15,16,17** respectively. Another micro ingredient may be stored in bin **18,** if desired. Barrels **23,24** for storing, respectively, corn-soy enzyme and phytase, if desired, are proximal to the micro ingredients. The concentrate of Example 1 is stored in tank **19,** Alimet in tank **20,** choline chloride in tank **21** and poultry fat in tank **22.**

Dry ingredients in central storage area **30** are fed in the amounts listed in Table 2 on to scales **31,32** and then to main mixer **40.** Micro ingredients are weighed on micro scale **35** and then fed to mixer **40** through line **124.** Liquid ingredients in tanks **18,19,20,21** are fed into mixer **40** through lines **125,126,127,128.**

Mixing of the ingredients in mixer **40** produces a red colored mash which is fed through line **130** to conditioner **50.** Steam and water added at the conditioner intensifies the red color. The mash is then fed to expander **52** and pelletizer **54** where red colored pellets are formed from the mash. Expander **52** improves pellet quality, improves nutrient digestibility and reduces microbial levels. Red colored pellets are transferred from pelletizer **54** to cooler **60** and then through line **150** to post pelleting application system **70.** Fat from tank **22** through line **140,** corn-soy enzyme from barrel **23** and phytase, if desired, from barrel **24** are applied to the pellets at post pelleting application system **70.** From the post pelleting application system finished feed is transferred to bins in bulk shipping storage area **80.** Bulk feed from bulk shipping storage area **80** may be loaded into trucks, rail cars, shipping containers, etc.

### Example 4: Methods of Use of Colored Feed

The effect of red colored feed on weight gain of broiler chicks in an industrial scale setting was examined.

### Spray Method:

A sprayable red colored dye solution was prepared by mixing 50 ml of a 15% (w/v) concentrate solution of red dye with 7 litres of distilled water to form a homogeneous solution. A broiler chicken starter feed having a composition as listed in Table 3 was prepared in a process similar to the one described in Example 3.

**Table 3**

| Ingredient | Amount (kg) |
|---|---|
| Corn Fine Rolled 8.0%CP | 506.37 |
| Soya Bean Meal (SBM) 47.5%CP | 123.45 |
| Canola Meal 37% CP | 100.00 |
| Meat and Bone Meal 50%CP | 100.00 |
| Wheat HRS Western 13%CP | 75.00 |
| Wheat Shorts 16%CP | 71.60 |
| Poultry Fat | 10.00 |
| Limestone B2 Grade | 4.10 |
| Salt white mixing | 2.40 |
| Mono-Dical Ca16/P21 | 2.00 |
| Alimet 88% | 1.68 |
| FF Broiler Micro (1 kg) Premix | 1.25 |
| Lysine-HCl | 0.75 |
| Soda bicarb - BP | 0.50 |
| Copper sulphate (25) | 0.40 |
| Chol-CI70 | 0.30 |
| Corn-soy enzyme | 0.20 |
| Total: | 1000.00 |

The feed was spread on paper in brooding areas on 16 floors of six barns. On each floor in each barn the feed was spread evenly on the paper to provide about 50-70 grams of feed per bird (about 3 days supply). On 10 floors of the six barns, the feed was sprayed evenly with the sprayable red colored dye solution described above using a backpack sprayer. Each barn had one floor of feed that remained uncolored. The dye solution was allowed to dry and the barn conditions between each floor in a barn were optimized and standardized in accordance with Horizon Poultry Excellence Program Standard Operating Procedures. On each floor, newly hatched broiler chicks were tipped onto the paper and allowed to feed themselves. From Day 3 onward, birds on all floors in all barns were fed the same feed containing no red colored dye.

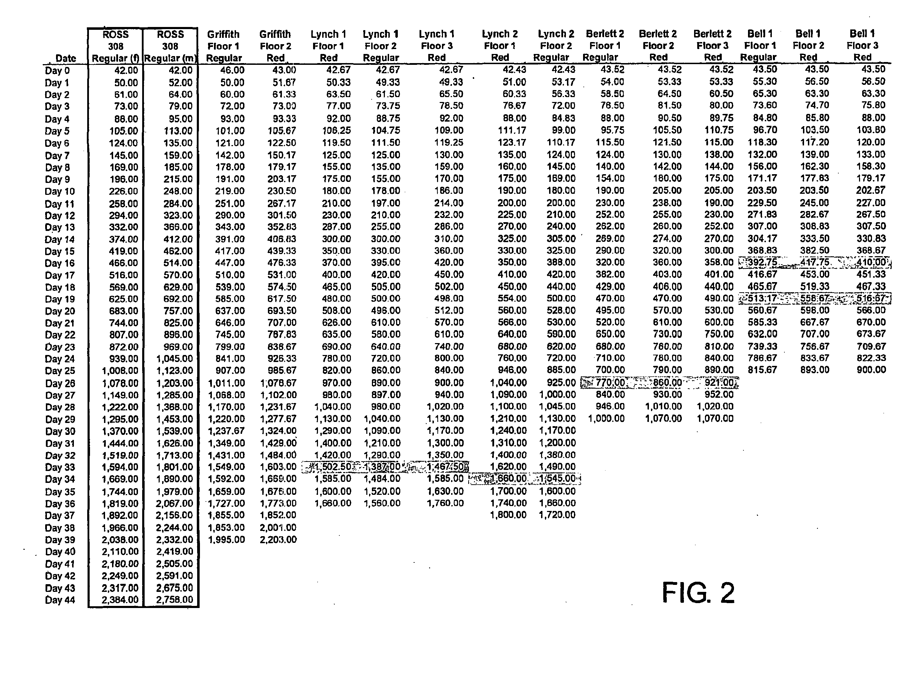

Bird weights were taken three times per day from six different areas on each floor each day. For each weighing, 10 birds were randomly selected from each of the six areas on each floor of each barn. Average daily weights were calculated for each floor of each barn. Results are illustrated in Fig. 2 and weights at Day 0, Day 7 and Day 20 are summarized in Table 4.

**Table 4**

| | Feed Color | Day 0 Weight (g) | Day 7 Weight (g) | Weight gain (g) | Day 20 Weight (g) | Weight gain (g) |
|---|---|---|---|---|---|---|
| A | Regular | 46.00 | 142.00 | 96.00 | 637.00 | 591.00 |
| B | Red | 43.00 | 150.17 | 107.17 | 693.50 | 650.50 |
| C | Red | 42.67 | 125.00 | 82.33 | 508.00 | 465.33 |
| D | Regular | 42.67 | 125.00 | 82.33 | 496.00 | 453.33 |
| E | Red | 42.67 | 130.00 | 87.33 | 512.00 | 469.33 |
| F | Red | 42.43 | 135.00 | 92.57 | ---- | ---- |
| G | Regular | 42.43 | 124.00 | 81.57 | ---- | ---- |
| H | Regular | 43.52 | 124.00 | 80.48 | ---- | ---- |
| I | Red | 43.52 | 130.00 | 86.48 | ---- | ---- |
| J | Red | 43.52 | 138.00 | 94.48 | ---- | ---- |
| K | Regular | 43.50 | 132.00 | 88.50 | ---- | ---- |
| L | Red | 43.50 | 139.00 | 95.50 | ---- | ---- |

| | Barn | Floor | Sex of Bird |
|---|---|---|---|
| A | Griffith | Floor 1 | pullets |
| B | Griffith | Floor 2 | pullets |
| C | Lynch 1 | Floor 1 | cockerals |
| D | Lynch 1 | Floor 2 | cockerals |
| E | Lynch 1 | Floor 3 | cockerals |
| F | Lynch 2 | Floor 1 | pullets |
| G | Lynch 2 | Floor 2 | pullets |
| H | Berlett 2 | Floor 1 | cockerals |
| I | Berlett 2 | Floor 2 | cockerals |
| J | Berlett 2 | Floor 3 | cockerals |
| K | Bell 1 | Floor 1 | pullets |
| L | Bell 1 | Floor 2 | pullets |

Inspection of Fig. 2 and Table 4 shows that broiler chicks, whether male (cockerals) or female (pullets), consistently gain more weight after 7 days when fed red colored starter feed rather than regular, uncolored starter feed of the same nutrient composition. The increased weight gain in the first 7 days was magnified over 20 days even though all birds received the same feed from Day 3 onward.

Fig. 2 also provides idealized performance data for male (cockerel) and female (pullet) Ross 308 broilers. Weight gain profiles for broiler chicks fed red colored starter feed compare favourably with the idealized data. Data collected from the Griffith barn shows weight gains exceeding the idealized data for female broiler chicks fed red colored feed. In Fig. 2, the shaded numbers are from days that weights were not taken due to either extreme heat or other emergencies on the farm. The data entered for these dates have been calculated by taking the (previous day + following day)/2.

### Milling Method:

Regular and red colored broiler chicken starter feeds were prepared in separate milling processes, both processes following a procedure similar to the one described in Example 3. For the red colored feed, a concentrate as described in Example 1 was added in the main mixer by pouring 12 kg of the concentrate into the mixer using a pail. The compositions of the regular and red colored feeds are provided in Table 5.

**Table 5**

| Ingredient | Regular Feed Amount (kg) | Red Colored Feed Amount (kg) |
|---|---|---|
| Corn Fine Rolled 8.0%CP | 506.37 | 494.37 |
| Soya Bean Meal (SBM) 47.5%CP | 123.45 | 123.45 |
| Canola Meal 37% CP | 100.00 | 100.00 |
| Meat and Bone Meal 50%CP | 100.00 | 100.00 |
| Wheat HRS Western 13%CP | 75.00 | 75.00 |
| Wheat Shorts 16%CP | 71.60 | 71.60 |
| Poultry Fat | 10.00 | 10.00 |
| Limestone B2 Grade | 4.10 | 4.10 |
| Salt white mixing | 2.40 | 2.40 |
| Mono-Dical Ca16/P21 | 2.00 | 2.00 |
| Alimet 88% | 1.68 | 1.68 |
| FF Broiler Micro (1 kg) Premix | 1.25 | 1.25 |
| Lysine-HCl | 0.75 | 0.75 |
| Soda bicarb - BP | 0.50 | 0.50 |
| Copper sulphate (25) | 0.40 | 0.40 |
| Chol-CI70 | 0.30 | 0.30 |
| Corn-soy enzyme | 0.20 | 0.20 |
| Red concentrate of Example 1 | 0.00 | 12.00 |
| Total: | 1000.00 | 1000.00 |

The feed was spread on paper in brooding areas on five floors of two barns. On each floor in each barn feed was spread evenly on the paper to provide about 50-70 grams of feed per bird (about 3 days supply). Each barn had one floor of regular feed. One barn had two floors of red colored feed and the other barn had one floor of red colored feed. The barn conditions between each floor in a barn were optimized and standardized in accordance with Horizon Poultry Excellence Program Standard Operating Procedures. On each floor, newly hatched cockerel broiler chicks were tipped onto the paper and allowed to feed themselves. From Day 3 onward, birds on all floors in all barns were fed the same uncolored feed.

Bird weights were taken three times per day from six different areas on each floor each day. For each weighing, 10 birds were randomly selected from each of the six areas on each floor of each barn. Average daily weights were calculated for each floor of each barn. Results are summarized in Table 6.

**Table 6**

| | Smith 1 Floor 1 Regular | Smith 1 Floor 2 Red | Smith 1 Floor 3 Red | Smith 2 Floor 1 Regular | Smith 2 Floor 2 Red |
|---|---|---|---|---|---|
| | Weight (g) | Weight (g) | Weight (g) | Weight (g) | Weight (g) |
| Day 0 | 46.00 | 46.00 | 46.00 | 42.00 | 42.00 |
| Day 1 | 54.00 | 55.50 | 54.00 | 53.33 | 53.17 |
| Day 2 | 65.00 | 67.00 | 66.67 | 63.50 | 64.50 |
| Day 3 | 77.50 | 81.50 | 81.17 | 74.83 | 75.17 |
| Day 4 | 90.83 | 96.17 | 95.67 | 90.67 | 93.00 |
| Day 5 | 107.17 | 112.00 | 111.50 | 98.17 | 104.67 |
| Day 6 | 117.50 | 123.83 | 127.00 | 119.83 | 117.17 |
| Day 7 | 136.00 | 143.00 | 147.17 | 135.50 | 137.00 |
| Day 8 | 152.75 | 161.25 | 162.25 | | |
| Day 9 | 176.50 | 195.75 | 184.25 | | |
| Day 10 | 195.00 | 215.50 | 208.25 | | |

In both barns, birds fed red colored starter feed for the first 3 days of life showed increases in weight at 7 days over birds fed uncolored feed. The results demonstrate that a milling process using a concentrate of the present invention is effective at providing bulk colored feed that can improve weight gain in an animal.

It will be understood that certain features and sub-combinations are of utility and may be employed without reference to other features and sub-combinations. This is contemplated by and is within the scope of the claims.

## Claims

1. A concentrate for preparing a colored animal feed comprising:
from 2 wt% to 10 wt% of a physiologically acceptable feed consumption enhancing food-coloring agent compatible with animal feed ingredients;
from 3 wt% to 15 wt% of a physiologically acceptable component compatible with animal feed ingredients, the component consisting of at least one element of the group consisting of sugars, salts and other electrolytes; and, the balance being water,
all weights based on weight of the concentrate.

2. The concentrate of claim 1, wherein the food-coloring agent is a red or blue food-coloring agent.

3. The concentrate of claim 1, wherein the food-coloring agent is a red food-coloring agent.

4. A process for preparing colored animal feed, the process comprising:
providing a concentrate as defined in any one of claims 1 to 3; mixing the concentrate with animal feed ingredients in an amount of 0.5 to 2 wt% based on the total weight of the mixture; and, further processing the mixture into colored animal feed.

5. The process of claim 4, wherein the animal feed ingredients are mixed in a mixer to form a mash, and mixing of the concentrate is performed in the mixer together with the animal feed ingredients to form a colored mash.

6. The process of claim 4, wherein the animal feed ingredients are mixed in a mixer to form a mash, the mash is pelletized to form pellets, and the concentrate is mixed with the mash after the mash is formed but before the mash is pelletized.

7. The process of claim 4, wherein the animal feed ingredients are mixed in a mixer to form a mash, the mash is pelletized to form pellets, and the concentrate is mixed with the pellets to form colored pellets.

8. The process of any one of claims 5 to 7, further comprising expanding the mash.

9. Colored animal feed comprising 30-40 wt% com, 10-30 wt% wheat, 10-15 wt% soya bean, 5-10 wt% canola, 0.05-0.25 wt% of a physiologically acceptable mineral, 0.01-0.05 wt% of a physiologically acceptable enzyme, and 0.5-2 wt% of a concentrate as defined in any one of claims 1 to 3.

10. A method of increasing weight gain of an animal, the method comprising preparing a colored animal feed from a concentrate as defined in any one of claims 1 to 3, and feeding the colored animal feed to the animal.

11. The method of claim 10, wherein the colored animal feed is fed to the animal for the first 7 days of the animal's life.

12. The method of claim 10 or 11, wherein the animal is swine or poultry.

13. The method of claim 10 or 11, wherein the animal is a chicken.

14. The method of claim 10, the method comprising mixing a concentrate as defined in any one of claims 1 to 3 with a physiological acceptable diluent to form a mixture, applying the mixture to animal feed to form colored animal feed, drying the colored animal feed, providing the colored animal feed to the animal, and allowing the animal to eat the colored animal feed, the method enhancing consumption of animal feed by an animal.

15. The method of claim 14, wherein the mixture has a diluent:concentrate volume ratio of about 200:1.

## Patentansprüche

1. Konzentrat zur Herstellung eines gefärbten Tierfutters, umfassend:
2 Gew.-% bis 10 Gew.-% eines physiologisch akzeptablen, den Futterverzehr verbessernden Lebensmittelfarbstoffs, der mit Tierfutteringredienzien kompatibel ist;
3 Gew.-% bis 15 Gew.-% einer physiologisch akzeptablen Komponente, die mit Tierfutteringredienzien kompatibel ist, wobei die Komponente aus mindestens einem Element der Gruppe besteht, die aus Zuckern, Salzen und anderen Elektrolyten besteht; und
wobei der Rest Wasser ist,
wobei alle Gewichte auf das Gewicht des Konzentrats bezogen sind.

2. Konzentrat nach Anspruch 1, wobei der Lebensmittelfarbstoff ein roter oder blauer Lebensmittelfarbstoff ist.

3. Konzentrat nach Anspruch 1, wobei der Lebensmittelfarbstoff ein roter Lebensmittelfarbstoff ist.

4. Verfahren zur Herstellung von gefärbtem Tierfutter, wobei das Verfahren Folgendes umfasst: Bereitstellen eines Konzentrats wie in einem der Ansprüche 1 bis 3 definiert; Mischen des Konzentrats mit Tierfutteringredienzien in einer Menge von 0,5 bis 2 Gew.-%, bezogen auf das Gesamtgewicht der Mischung; und weiteres Verarbeiten der Mischung zu gefärbtem Tierfutter.

5. Verfahren nach Anspruch 4, wobei die Tierfutteringredienzien in einer Mischvorrichtung unter Bildung eines Breis gemischt werden und das Mischen des Konzentrats in der Mischvorrichtung zusammen mit den Tierfutteringredienzien durchgeführt wird, um einen gefärbten Brei zu bilden.

6. Verfahren nach Anspruch 4, wobei die Tierfutteringredienzien in einer Mischvorrichtung unter Bildung eines Breis gemischt werden, der Brei zur Bildung von Pellets pelletiert und das Konzentrat mit dem Brei gemischt wird, nachdem der Brei gebildet worden ist, jedoch bevor der Brei pelletiert wird.

7. Verfahren nach Anspruch 4, wobei die Tierfutteringredienzien in einer Mischvorrichtung unter Bildung eines Breis gemischt werden, der Brei zur Bildung von Pellets pelletiert und das Konzentrat mit den Pellets zur Bildung von gefärbten Pellets gemischt wird.

8. Verfahren nach einem der Ansprüche 5 bis 7, des Weiteren das Expandieren des Breis umfassend.

9. Gefärbtes Tierfutter umfassend 30 - 40 Gew.-% Mais, 10 - 30 Gew.-% Weizen, 10 - 15 Gew.-% Sojabohnen, 5 - 10 Gew.-% Raps, 0,05 - 0,25 Gew.-% eines physiologisch akzeptablen Minerals, 0,01 - 0,05 Gew.-% eines physiologisch akzeptablen Enzyms und 0,5 - 2 Gew.-% eines Konzentrats wie in einem der Ansprüche 1 bis 3 definiert.

10. Verfahren zum Erhöhen der Gewichtszunahme eines Tiers, wobei das Verfahren das Herstellen eines gefärbten Tierfutters aus einem Konzentrat wie in einem der Ansprüche 1 bis 3 definiert, und das Verfüttern des gefärbten Tierfutters an ein Tier umfasst.

11. Verfahren nach Anspruch 10, wobei das gefärbte Tierfutter an das Tier während der ersten 7 Tage des Lebens des Tiers verfüttert wird.

12. Verfahren nach Anspruch 10 oder 11, wobei das Tier ein Schwein oder Geflügel ist.

13. Verfahren nach Anspruch 10 oder 11, wobei das Tier ein Huhn ist.

14. Verfahren nach Anspruch 10, umfassend: Mischen eines Konzentrats, wie in einem der Ansprüche 1 bis 3 definiert, mit einem physiologisch akzeptablen Verdünnungsmittel zur Bildung einer Mischung, Aufbringen der Mischung auf Tierfutter zur Bildung von gefärbtem Tierfutter, Trocknen des gefärbten Tierfutters, Anbieten des gefärbten Tierfutters dem Tier und Zulassen, dass das Tier das gefärbte Tierfutter frisst, wobei das Verfahren den Verzehr von Tierfutter durch das Tier verbessert.

15. Verfahren nach Anspruch 14, wobei die Mischung ein Volumenverhältnis von Verdünnungsmittel zu Konzentrat von etwa 200:1 aufweist.

## Revendications

1. Concentré pour la préparation d'un aliment coloré pour animaux, comprenant :
de 2 à 10 % en poids d'un agent colorant alimentaire, renforçant la consommation des aliments pour animaux, physiologiquement acceptable, compatible avec les ingrédients d'aliments pour animaux ;
de 3 à 15 % en poids d'un composant physiologiquement acceptable, compatible avec les ingrédients d'aliments pour animaux, le composant consistant en au moins un élément du groupe consistant en les sucres, les sels et d'autres électrolytes, et
le reste étant constitué d'eau,
tous les poids étant rapportés au poids du concentré.

2. Concentré selon la revendication 1, dans lequel l'agent colorant alimentaire est un agent colorant alimentaire rouge ou bleu.

3. Concentré selon la revendication 1, dans lequel l'agent colorant alimentaire est un agent colorant alimentaire rouge.

4. Procédé de préparation d'un aliment coloré pour animaux, le procédé comprenant : la mise à disposition d'un concentré tel que défini dans l'une quelconque des revendications 1 à 3 ; le mélange du concentré à des ingrédients d'aliments pour animaux en une quantité de 0,5 à 2 % en poids par rapport au poids total du mélange ; et la transformation plus poussée du mélange en un aliment coloré pour animaux.

5. Procédé selon la revendication 4, dans lequel les ingrédients d'aliments pour animaux sont mélangés dans un mélangeur pour former un mash, le mélange du concentré étant réalisé dans le mélangeur en même temps que les ingrédients d'aliments pour animaux, pour former un mash coloré.

6. Procédé selon la revendication 4, dans lequel les ingrédients d'aliments pour animaux sont mélangés dans un mélangeur pour former un mash, le mash est granulé pour former des granulés, et le concentré est mélangé au mash après formation du mash mais avant granulation du mash.

7. Procédé selon la revendication 4, dans lequel les ingrédients d'aliments pour animaux sont mélangés dans un mélangeur pour former un mash, le mash est granulé pour former des granulés, et le concentré est mélangé aux granulés pour former des granulés colorés.

8. Procédé selon l'une quelconque des revendications 5 à 7, qui comprend en outre l'expansion du mash.

9. Aliment coloré pour animaux comprenant 30 à 40 % en poids de maïs, 10 à 30 % en poids de blé, 10 à 15 % en poids de soja, 5 à 10 % en poids de canola, 0,05 à 0,25 % en poids d'un minéral physiologiquement acceptable, 0,01 à 0,05 % en poids d'une enzyme physiologiquement acceptable, et 0,5 à 2 % en poids d'un concentré tel que défini dans l'une quelconque des revendications 1 à 3.

10. Procédé pour augmenter le gain de poids d'un animal, le procédé comprenant la préparation d'un aliment coloré pour animaux à partir d'un concentré tel que défini dans l'une quelconque des revendications 1 à 3, et le fait de donner à l'animal l'aliment coloré pour animaux.

11. Procédé selon la revendication 10, dans lequel l'aliment coloré pour animaux est donné à l'animal pendant les 7 premiers jours de la vie de l'animal.

12. Procédé selon la revendication 10 ou 11, dans lequel l'animal est un suidé ou une volaille.

13. Procédé selon la revendication 10 ou 11, dans lequel l'animal est un poulet.

14. Procédé selon la revendication 10, le procédé comprenant le mélange d'un concentré tel que défini dans l'une quelconque des revendications 1 à 3 à un diluant physiologiquement acceptable pour former un mélange, l'application du mélange à l'aliment pour animaux pour former un aliment coloré pour animaux, le séchage de l'aliment coloré pour animaux, le fait de donner à l'animal l'aliment coloré pour animaux, et le fait de laisser l'animal manger l'aliment coloré pour animaux, le procédé renforçant la consommation de l'aliment pour animaux par un animal.

15. Procédé selon la revendication 14, dans lequel le mélange présente un rapport en volume diluant/concentré d'environ 200:1.
